# EUROPEAN PATENT APPLICATION

(11) **EP 4 620 906 A1**
(43) Date of publication of application: **24.09.2025**
(21) Application number: 25165282.2
(22) Date of filing: 21.03.2025
(51) Int. Cl.: C01B 3/38, H01M 8/0612, C01B 3/26, B01J 8/06, B01J 7/00, B01J 8/00

(54) **FUEL CELL REFORMER AND FUEL CELL SYSTEM INCLUDING SAME**

(30) Priority: 21.03.2024 KR 20240038945
(71) Applicant: MICO POWER LTD, Gyeonggi-do 17567 (KR)
(72) Inventor: Jeon, Kwang Sung, Gyeonggi-do 17567 (KR); Lee, Shin Ku, Gyeonggi-do 17567 (KR); Lee, Jun Woo, Gyeonggi-do 17567 (KR)
(74) Representative: Mewburn Ellis LLP

(57) **Abstract**

The present invention provides a fuel cell reformer and a fuel cell system including the fuel cell reformer that includes a housing including a flow path for guiding a flow of fuel in the housing, an inlet formed on a lower surface to communicate with the flow path and receiving the fuel from an outside, and an outlet formed on an upper surface to discharge hydrogen, which is generated by fuel reformation performed by a catalyst and flows along the flow path, to the outside; a catalyst accommodated in the flow path of the housing to reform the fuel flowing along the flow path to generate the hydrogen; and anti-separation plates respectively provided at the inlet and the outlet of the housing to prevent the catalyst accommodated in the flow path from being separated through the inlet and the outlet, wherein multiple slots are formed within a dimension that allows normal shape implementation, a partition wall member is provided in the middle of each of the multiple slots, and the multiple slots have a physical equal space distribution structure.

## Description

### Technical Field

The present invention relates to a fuel cell reformer, and more specifically, to a fuel cell reformer that receives fuel (hydrocarbon-based natural gas, methanol, ethanol, or so on), causes the fuel to flow along a path, generates hydrogen gas from the fuel reformed by a catalyst accommodated in the path, and supplies the generated hydrogen to a stack.

### Background Art

In general, a fuel cell is a device that produces electricity through a chemical reaction between oxygen in the air and hydrogen, and directly converts the chemical energy generated in the process of combining the hydrogen and the oxygen to generate water into electrical energy.

Such a fuel cell uses hydrogen and oxygen contained in hydrocarbon-based materials, such as methanol, ethanol, or natural gas, along with air containing oxygen, as fuel.

Typically, fuel cells are classified into a phosphoric acid fuel cells that operates at a temperature around 150 to 200°C, a molten carbonate fuel cell that operates at a high temperature of 600 to 700°C, a solid oxide fuel cell that operates at a temperature above 1000°C, a polymer electrolyte fuel cell that operates at a room temperature to 100°C or less, an alkaline fuel cell, and so on, depending on the type of electrolyte that is used.

Although the fuel cells have different fuel types, operating temperatures, catalysts, electrolytes, and so on, the fuel cells fundamentally operate on the same principle.

A fuel cell system supplies hydrocarbon fuel from a fuel supply unit, and the supplied fuel is converted into gas containing a lot of hydrogen by a reformer.

Also, the hydrogen-rich gas discharged from the reformer and the air containing oxygen are provided to a fuel cell stack, and direct current (DC) power is output through a combination reaction of hydrogen and oxygen that occurs in the fuel cell stack.

In this case, a catalyst that reforms hydrocarbon fuel into hydrogen is accommodated inside a housing of a reformer, and in order to prevent the catalyst having an uneven size from escaping outside the housing (such that the catalyst does not invade front and rear heat exchangers), a mesh net (metal mesh net) smaller than the catalyst is provided at an inlet and an outlet through which a fluid flows in and out, and due to oxidation of the mesh net, the catalyst is detached from the reformer and moves to an adjacent heat exchanger, which causes the stack to be damaged due to blockage of an anode line and particle penetration, or CO concentration increases and carbon black occurs in a stack due to instability of the reforming state, and accordingly, there is a need for complementary/alternative solutions to enable long-term use of reformers in environments requiring high-temperature corrosion resistance.

A conventional reformer is disclosed in Patent Publication No. 10-2006-0021550 (2006.03.08).

### Disclosure of Invention

### Technical Problem

An objective of the present invention is to provide a fuel cell reformer and a fuel cell system including the fuel cell reformer, in which multiple slots are formed within a dimension that allows normal shape implementation, a partition wall member is provided in the middle of each of the multiple slots, and the multiple slots have a physical equal space distribution structure.

### Solution to Problem

A fuel cell reformer according to the present invention includes a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet, wherein one of the inlet and the outlet includes a slot extending in a first direction, and one of the first anti-separation member and the second anti-separation member corresponding to one of the inlet and the outlet includes an anti-separation plate arranged along a center of the slot in the first direction.

According to the present invention, the slot has a length in the first direction and a width in a second direction intersecting the first direction, the anti-separation plate has a plate structure having a length in the first direction, a thickness in the second direction, and a width in a third direction intersecting the first and second directions, and the anti-separation plate has a thickness less than a width of the slot.

**In** addition, according to the present invention, a fixation groove can be formed at each of both end portions of the slot in the first direction and the anti-separation plate is inserted into and fixed to the fixation groove.

A fuel cell reformer according to the present invention includes a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet, wherein one of the inlet and the outlet includes a slot extending in a first direction, and one of the first anti-separation member and the second anti-separation member corresponding to one of the inlet and the outlet includes an anti-separation rod arranged along a center of the slot in the first direction.

According to the present invention, the slot has a length in the first direction and a width in a second direction intersecting the first direction, the anti-separation rod has a circular rod structure having a length in the first direction and a diameter in the second direction and a third direction, and the anti-separation rod has a diameter less than a width of the slot.

**In** addition, according to the present invention, an end of the anti-separation rod can be welded and fixed to each of both end portions of the slot in the first direction.

A fuel cell system according to the present invention includes a steam generator configured to convert liquid water provided from a water supply device into steam; a fuel cell reformer configured to generate fuel gas including hydrogen by causing steam provided from the steam generator to react with hydrocarbon fuel; and a fuel cell stack configured to generate electricity by using the fuel gas provided from the fuel cell reformer and air provided from an external air supply device, wherein the fuel cell reformer include a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet, one of the inlet and the outlet includes a slot extending in a first direction, and one of the first anti-separation member and the second anti-separation member corresponding to one of the inlet and the outlet includes an anti-separation plate arranged along a center of the slot in the first direction.

According to the present invention, the slot of the fuel cell reformer has a length in the first direction and a width in a second direction intersecting the first direction, the anti-separation plate has a plate structure having a length in the first direction, a thickness in the second direction, and a width in a third direction intersecting the first and second directions, and the anti-separation plate has a thickness less than a width of the slot.

**In** addition, according to the present invention, in the fuel cell reformer, a fixation groove is formed at each of both end portions of the slot in the first direction and the anti-separation plate is inserted into and fixed to the fixation groove.

A steam generator for converting liquid water provided from a water supply device into steam, according to the present invention, includes a fuel cell reformer configured to generate fuel gas including hydrogen by causing steam provided from the steam generator to react with hydrocarbon fuel; and a fuel cell stack configured to generate electricity by using the fuel gas provided from the fuel cell reformer and air provided from an external air supply device, herein the fuel cell reformer include a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet, one of the inlet and the outlet includes a slot extending in a first direction, and one of the first anti-separation member and the second anti-separation member corresponding to one of the inlet and the outlet includes an anti-separation rod arranged along a center of the slot in the first direction.

According to the present invention, the slot of the fuel cell reformer has a length in the first direction and a width in a second direction intersecting the first direction, the anti-separation rod has a circular rod structure having a length in the first direction and a diameter in the second direction and a third direction, and the anti-separation rod has a diameter less than a width of the slot.

In addition, according to the present invention, in the fuel cell reformer, an end of the anti-separation rod can be welded and fixed to each of both end portions of the slot in the first direction.

### Advantageous Effects of Invention

A fuel cell reformer according to the present invention and a fuel cell system including the fuel cell reformer have following effects.

A plurality of slots through which a fluid passes are provided at an inlet and outlet of a housing of a reformer, and thus, components can be simplified, the fuel cell reformer can be easily manufactured, manufacturing costs can be reduced, there is no change in the amount of catalyst even when the fuel cell reformer is used for a long time, differential pressure values are equal to each other, and a current problem due to the reinforcement of high-temperature corrosion resistance is solved.

### Brief Description of Drawings

FIG. 1 is an example view illustrating a fuel cell reformer according to the first embodiment of the present invention.
FIG. 2 is an example view illustrating a cross-section of a fuel cell reformer according to the first embodiment of the present invention.
FIG. 3 is an example view illustrating a cross-section of an anti-separation plate included in a fuel cell reformer according to the first embodiment of the present invention.
FIG. 4 is an example view illustrating a fuel cell reformer according to the second embodiment of the present invention.
FIG. 5 is an example view illustrating a cross-section of a fuel cell reformer according to the second embodiment of the present invention.
FIG. 6 is an example view illustrating a cross-section of an anti-separation rod included in a fuel cell reformer according to the second embodiment of the present invention.
FIG. 7 is a diagram illustrating a fuel cell system according to an embodiment of the present invention.

### Detailed Description for Carrying out the Invention

Hereinafter, preferred embodiments of the present invention will be described in detail with reference to the attached drawings. Prior to this, the terms or words used in the present specification and claims should not be interpreted as limited to their usual or dictionary meanings, and should be interpreted as meanings and concepts that conform to the technical idea of the present invention based on the principle that the inventor can appropriately define the concepts of the terms in order to explain his or her own invention in the best way.

Therefore, the embodiments described in the present specification and the configurations illustrated in the drawings are merely the most preferred embodiments of the present invention, and do not represent all of the technical ideas of the present invention, and thus, it should be understood that there can be equivalent modified examples that can be replaced at the time of the present application.

The present invention relates to a fuel cell reformer which prevents a spherical catalyst accommodated in a flow path through which a fluid (fuel and hydrogen gas) flows from being separated to the outside through an inlet and outlet of a housing and from being introduced into an adjacent heat exchanger and stack, and a fuel cell system including the fuel cell reformer, and can be described below with reference to the drawings.

### Fuel Cell Reformer

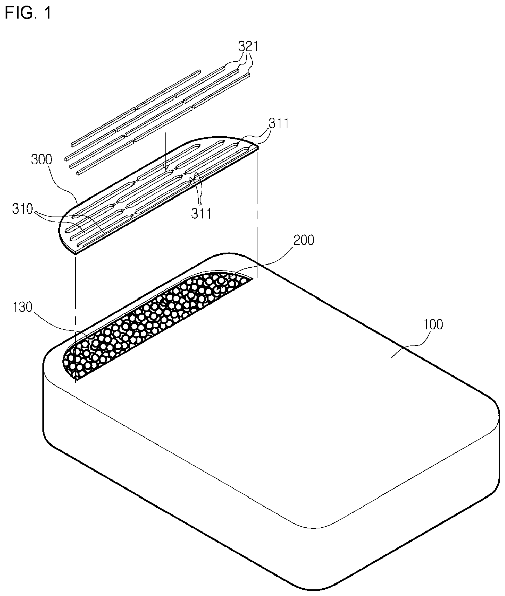

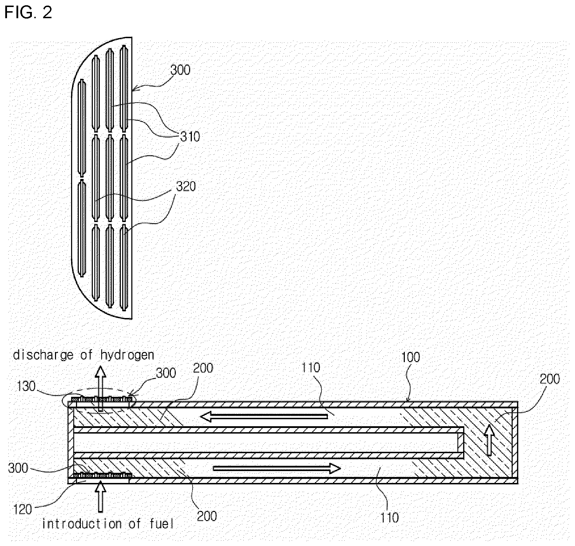

Referring to FIGS. 1 to 3, a fuel cell reformer according to a first embodiment of the present invention includes a housing 100, a catalyst 200, a first anti-separation member 300, and a second anti-separation member 300, and first, the housing 100 includes a flow path 110 for guiding a flow of fuel (natural gas of hydrocarbon series, methanol, ethanol, or so on), and on a first surface, an inlet 120 is formed through which fuel is introduced from the outside while communicating with the flow path 110, and on a second surface opposite to the first surface, an outlet 130 is formed through which hydrogen generated by fuel reformation performed by the catalyst 200 flows along the flow path 110 and discharges to the outside.

In this case, the housing 100 can be formed in a hexahedron to have a space therein, and the flow path can form a '⊂' or '⊃', but is not limited thereto and can be formed in various shapes.

The catalyst 200 is accommodated in the flow path 110 of the housing 100 and is a spherical catalyst having a diameter of 2 to 4 mm, and reforms fuel (hydrocarbon-based natural gas, methanol, ethanol, or so on) flowing along the flow path 110 to generate hydrogen gas.

The hydrogen generated by the catalyst 200 is discharged to the outside of the housing 100 through the outlet 130 together with the unreacted fuel gas, and can be supplied to an adjacent heat exchanger or stack.

Also, the inlet 120 and the outlet 130 of the housing 100 can be respectively provided with the first and second anti-separation members 300 to prevent the catalyst 200 accommodated in the path 110 from being separated through the inlet 120 and the outlet 130.

In this case, a slot 310 extending in a first direction can be formed in either the inlet 120 and the outlet 130 of the housing 100 or each of the inlet 120 and the outlet 130.

The slot 310 forms a path through which a fluid passes, and it is preferable that the slot 310 is formed as a long hole having a width of 3.6 mm for smooth passage of the fluid, and it is preferable that the slot 310 has a length in the first direction and a width in a second direction intersecting the first direction, and the slot 310 can include an anti-separation plate 321 that penetrates the slot 310.

The anti-separation plate 321 has a plate structure having a length in the first direction, a thickness in the second direction, and a width in a third direction intersecting the first and second directions, and it is preferable that the thickness of the anti-separation plate 321 is less than the width of the slot 310.

Also, a fixation groove 311 into which the anti-separation plate 321 is inserted to be fixed can be formed at each of both end portions of the slot 310 in the first direction.

An end portion of the anti-separation plate 321 inserted and fixed in the fixation groove 311 can be fixed by a forced fit.

Accordingly, the anti-separation plate 321 is provided at the center of the slot 310, and the anti-separation plate 321 forms a partition wall that divides a space of the slot 310, and accordingly, the space of the slot 310 is distributed.

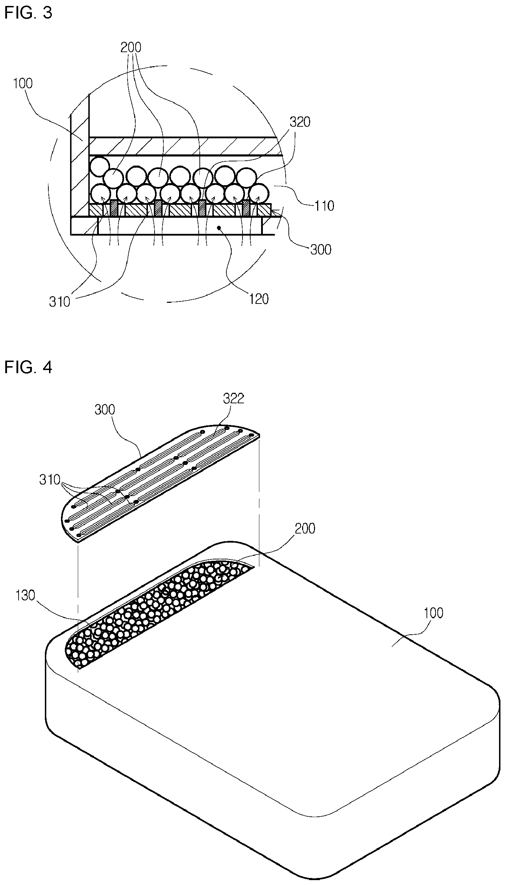

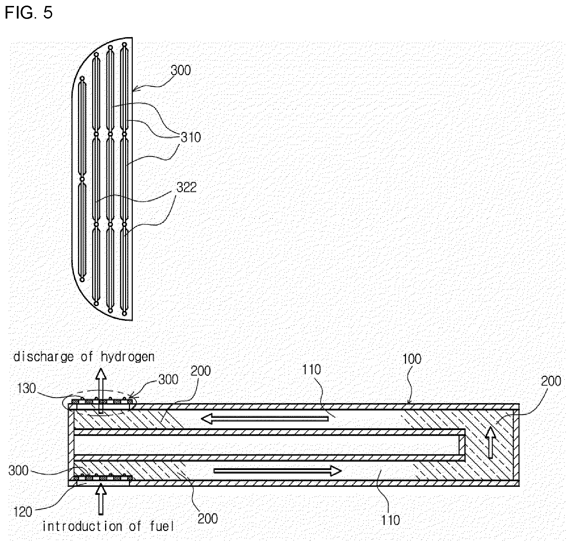

Referring to FIGS. 4 to 6, the fuel cell reformer according to the second embodiment of the present invention includes a housing 100, a catalyst 200, a first anti-separation member 300, and a second anti-separation member 300, and first, the housing 100 includes a flow path 110 for guiding a flow of fuel (natural gas of hydrocarbon series, methanol, ethanol, or so on), and on a first surface, an inlet 120 is formed through which fuel is introduced from the outside while communicating with the flow path 110, and on a second surface opposite to the first surface, an outlet 130 is formed through which hydrogen generated by fuel reformation performed by the catalyst 200 flows along the flow path 110 and discharges to the outside.

In this case, the housing 100 can be formed in a hexahedron to have a space therein, and the flow path can form a '⊂' or '⊃', but is not limited thereto and can be formed in various shapes.

The catalyst 200 is accommodated in the flow path 110 of the housing 100 and is a spherical catalyst having a diameter of 2 to 4 mm, and reforms fuel (hydrocarbon-based natural gas, methanol, ethanol, or so on) flowing along the flow path 110 to generate hydrogen gas.

The hydrogen generated by the catalyst 200 is discharged to the outside of the housing 100 through the outlet 130 together with the unreacted fuel gas, and can be supplied to an adjacent heat exchanger or stack.

Also, the inlet 120 and the outlet 130 of the housing 100 can be respectively provided with the first and second anti-separation members 300 to prevent the catalyst 200 accommodated in the path 110 from being separated through the inlet 120 and the outlet 130.

In this case, a slot 310 extending in a first direction can be formed in either the inlet 120 and the outlet 130 of the housing 100 or each of the inlet 120 and the outlet 130.

The slot 310 forms a path through which a fluid passes, and it is preferable that the slot 310 is formed as a long hole having a width of 3.6 mm for smooth passage of the fluid, and it is preferable that the slot 310 has a length in the first direction and a width in a second direction intersecting the first direction, and the slot 310 can include an anti-separation rod 322 that penetrates the slot 310.

The anti-separation rod 322 has a circular structure having a length in the first direction, a diameter in the second direction, and a diameter in the third direction intersecting the first and second directions, and the diameter of the anti-separation rod 322 is preferably less than a width of the slot 310.

Also, an end of the anti-separation rod 322 can be fixed by welding to each of both end portions of the slot 310 in the first direction.

Therefore, the anti-separation rod 322 provided at the center of the slot 310 forms a partition wall that divides a space of the slot 310, and accordingly, the space of the slot 310 is distributed.

According to an embodiment of the present invention, a fuel cell reformer include a plurality of slots and an anti-separation plate or anti-separation rod which is arranged at the center of the slots and provided at an inlet and outlet of the housing of the fuel cell reformer, and thus, components can be simplified, the fuel cell reformer can be easily manufactured, manufacturing costs can be reduced, there is no change in the amount of catalyst even when the fuel cell reformer is used for a long time, differential pressure values are equal to each other, and a current problem due to the reinforcement of high-temperature corrosion resistance is solved.

### Fuel Cell System

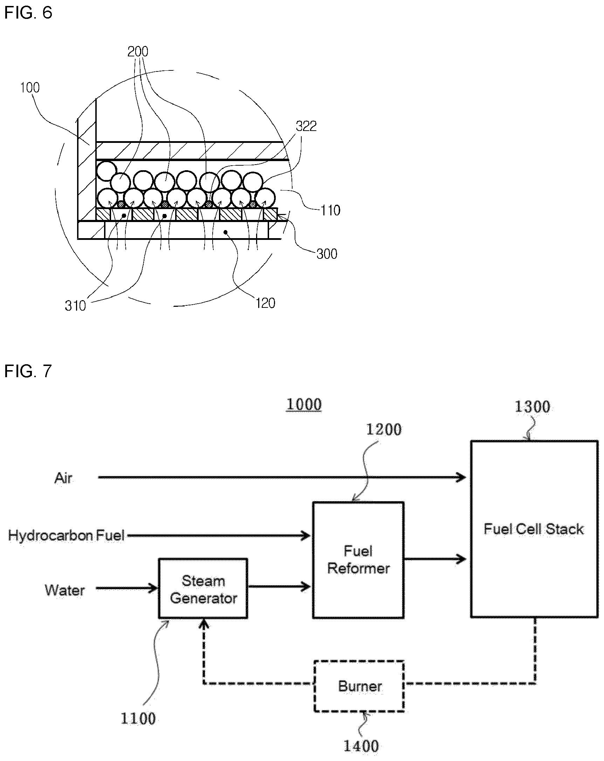

FIG. 7 is a diagram illustrating a fuel cell system according to an embodiment of the present invention.

Referring to FIG. 7, a fuel cell system 1000 according to an embodiment of the present invention can include a steam generator 1100, a fuel cell reformer 1200, and a fuel cell stack 1300.

The steam generator 1100 receives liquid water from an external water supply device (not illustrated), converts the liquid water into steam, and then supplies steam to the fuel cell reformer 1200. Any known or future-developed steam generator can be used as the steam generator 1100 without limitation, and accordingly, detailed descriptions thereof are omitted.

The fuel cell reformer 1200 can generate fuel gas including hydrogen by causing hydrocarbon fuel supplied from an external fuel supply device (not illustrated) to react with steam supplied from the steam generator 1100. The fuel cell reformer 1200 described with reference to FIGS. 1 to 6 can be used as the fuel cell reformer 1200, and accordingly, detailed descriptions thereof are omitted.

The fuel cell stack 1300 can generate electricity by using hydrogen of the fuel gas provided from the fuel cell reformer 1200 and oxygen of the air provided from an external air supply device (not illustrated). A solid oxide fuel cell stack, a solid polymer fuel cell stack, a phosphoric acid fuel cell stack, a molten carbonate fuel cell stack, or so on can be used as the fuel cell stack 1300 without limitation.

In addition, in the fuel cell system 1000 according to the embodiment of the present invention, a heating device of the steam generator 1100 can include a combustor 1400 as illustrated in FIG. 7.

The combustor 1400 can combust gas discharged from the fuel cell stack 1300 to supply high-temperature gas to a heating space of the steam generator 1100. Also, the combustor 1400 can supply thermal energy required for the reaction between the hydrocarbon fuel and the steam to the fuel cell reformer 1200. A known combustion device can be used as the combustor 1400 without limitation.

The present invention is described with reference to the embodiments illustrated in the drawings, but the embodiments are merely examples, and those skilled in the art will understand that various modifications and equivalent other embodiments can be derived therefrom. Therefore, the true technical protection scope of the present invention should be determined by the technical idea of the appended patent claims.

### Reference Signs List

- 100:: Housing
- 110:: Flow path
- 120:: Inlet
- 130:: Outlet
- 200:: Catalyst
- 300:: Anti-separation plate
- 310:: Slot
- 320:: Partition wall member

## Claims

1. A fuel cell reformer comprising:
a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside;
a catalyst accommodated in the flow path of the housing to reform the fuel flowing along the flow path to generate the hydrogen; and
a first anti-separation member and a second anti-separation member respectively provided at the inlet and the outlet of the housing to prevent the catalyst accommodated in the flow path from being separated through the inlet and the outlet,
wherein one of the inlet and the outlet includes a slot extending in a first direction, and
one of the first anti-separation member and the second anti-separation member corresponding to one of the inlet and the outlet includes an anti-separation plate arranged along a center of the slot in the first direction.

2. The fuel cell reformer of claim 1, wherein
the slot has a length in the first direction and a width in a second direction intersecting the first direction,
the anti-separation plate has a plate structure having a length in the first direction, a thickness in the second direction, and a width in a third direction intersecting the first and second directions, and
the anti-separation plate has a thickness less than a width of the slot.

3. The fuel cell reformer of claim 1, wherein
a fixation groove is formed at each of both end portions of the slot in the first direction and the anti-separation plate is inserted into and fixed to the fixation groove.

4. A fuel cell reformer comprising:
a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside;
a catalyst accommodated in the flow path of the housing to reform the fuel flowing along the flow path to generate the hydrogen; and
a first anti-separation member and a second anti-separation member respectively provided at the inlet and the outlet of the housing to prevent the catalyst accommodated in the flow path from being separated through the inlet and the outlet,
wherein one of the inlet and the outlet includes a slot extending in a first direction, and
one of the first anti-separation member and the second anti-separation member corresponding to one of the inlet and the outlet includes an anti-separation rod arranged along a center of the slot in the first direction.

5. The fuel cell reformer of claim 4, wherein
the slot has a length in the first direction and a width in a second direction intersecting the first direction,
the anti-separation rod has a circular rod structure having a length in the first direction and a diameter in the second direction and a third direction, and
the anti-separation rod has a diameter less than a width of the slot.

6. The fuel cell reformer of claim 4, wherein
an end of the anti-separation rod is welded and fixed to each of both end portions of the slot in the first direction.

7. A fuel cell system comprising:
a steam generator configured to convert liquid water provided from a water supply device into steam;
a fuel cell reformer configured to generate fuel gas including hydrogen by causing steam provided from the steam generator to react with hydrocarbon fuel; and
a fuel cell stack configured to generate electricity by using the fuel gas provided from the fuel cell reformer and air provided from an external air supply device,
wherein the fuel cell reformer include a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet,
one of the inlet and the outlet includes a slot extending in a first direction, and
one of the first anti-separation member and the second anti-separation member corresponding to one of the inlet and the outlet includes an anti-separation plate arranged along a center of the slot in the first direction.

8. The fuel cell system of claim 7, wherein
the slot of the fuel cell reformer has a length in the first direction and a width in a second direction intersecting the first direction,
the anti-separation plate has a plate structure having a length in the first direction, a thickness in the second direction, and a width in a third direction intersecting the first and second directions, and
the anti-separation plate has a thickness less than a width of the slot.

9. The fuel cell system of claim 7, wherein,
in the fuel cell reformer, a fixation groove is formed at each of both end portions of the slot in the first direction and the anti-separation plate is inserted into and fixed to the fixation groove.

10. A steam generator for converting liquid water provided from a water supply device into steam, the steam generator comprising:
a fuel cell reformer configured to generate fuel gas including hydrogen by causing steam provided from the steam generator to react with hydrocarbon fuel; and
a fuel cell stack configured to generate electricity by using the fuel gas provided from the fuel cell reformer and air provided from an external air supply device,
wherein the fuel cell reformer include a housing including a flow path for guiding a flow of fuel in the housing, an inlet formed on a first surface to communicate with the flow path and receiving the fuel from an outside, and an outlet formed on a second surface opposite to the first surface to discharge hydrogen, which is generated by fuel reformation performed by a catalyst and flows along the flow path, to the outside; a catalyst accommodated in the flow path of the housing to reform the fuel flowing along the flow path to generate the hydrogen; and a first anti-separation member and a second anti-separation member respectively provided at the inlet and the outlet of the housing to prevent the catalyst accommodated in the flow path from being separated through the inlet and the outlet,
one of the inlet and the outlet includes a slot extending in a first direction, and
one of the first anti-separation member and the second anti-separation member corresponding to one of the inlet and the outlet includes an anti-separation rod arranged along a center of the slot in the first direction.

11. The steam generator of claim 10, wherein
the slot of the fuel cell reformer has a length in the first direction and a width in a second direction intersecting the first direction,
the anti-separation rod has a circular rod structure having a length in the first direction and a diameter in the second direction and a third direction, and
the anti-separation rod has a diameter less than a width of the slot.

12. The steam generator of claim 10, wherein,
in the fuel cell reformer, an end of the anti-separation rod is welded and fixed to each of both end portions of the slot in the first direction.
